# EUROPEAN PATENT SPECIFICATION

(11) **EP 1 502 822 B1**
(45) Date of publication and mention of the grant of the patent: **03.01.2007**
(21) Application number: 04291899.5
(22) Date of filing: 26.07.2004
(51) Int. Cl.: B60R 16/02

(54) **Method of protecting a wire harness from water penetration**
Methode um einen Kabelbaum vor Wassereindringung zu schützen
Méthode pour protéger un faisceau de câbles de la pénétration d'eau

(30) Priority: 29.07.2003 JP 2003203068
(43) Date of publication of application: 02.02.2005
(73) Proprietor: Sumitomo Wiring Systems, Ltd., Yokkaichi-City, Mie, 510-8503 (JP)
(72) Inventor: Ootsuki, Hiroyuki c/o Sumitomo Wiring Systems, Ltd, Mie 510-8503 (JP)
(74) Representative: Uchida, Kenji

(56) References cited:
- EP-A- 1 211 142
- US-A1- 2002 185 297
- US-A1- 2002 195 267
- US-A1- 2003 006 523
- PATENT ABSTRACTS OF JAPAN vol. 1999, no. 13, 30 November 1999 (1999-11-30) & JP 11 238416 A (SUMITOMO WIRING SYST LTD; TOYOTA MOTOR CORP), 31 August 1999 (1999-08-31)

## Description

The present invention relates to a method of preventing water from penetrating into the gaps formed between the electrical wires of a wire harness. Such a wire harness is particularly adapted to a use in vehicles, where it is fitted into a grommet and passed through a hole formed in a panel of the vehicle.

When a wire harness for a vehicle is made to pass from the engine compartment to the passenger compartment, it is held in a grommet fitted around a hole in a car panel (bulkhead) separating the engine compartment from the passenger compartment. Such a configuration can prevent water seepage from the engine compartment into the passenger compartment.

The grommet commonly has a tubular portion which extends to a funnel-shaped portion having an enlarged circular end section. The external face of the enlarged end section is provided with a circular groove that can engage with the peripheral rim of a hole formed in a car panel. In this manner, the grommet and the panel hole provide an efficient seal against water seepage. In addition, the section of the wire harness that passes through the tubular portion is preferably gripped therein. Moreover, when a grommet is used in a water-filled area, the tubular portion is usually treated with a water-sealing agent.

For instance, JP-A-HEI 10-135657 discloses a process for treating electrical wires forming part of a wire harness, in which the wires are grouped in parallel, and the portion subject to water-protection treatment is covered with a water-sealing agent that has a viscosity of e.g. 1,000 to 2,000 poises. The electrical wires are then assembled to form a substantially round cross-section and passed through a grommet.

US 2003/006523 discloses a method of preventing water from penetrating into a wire harness, said wire harness containing a plurality of electrical wires and adapted to fit into a grommet and to pass through a hole formed in a panel of a vehicle, said electrical wires comprising respective sections which are to form at least part of a water-sealed portion, said method comprises the steps of:
- arranging said electrical wires, so that said sections forming part of said water-sealed portion are arranged substantially in parallel;

However, when the water-sealing agent has such a high level of viscosity, it must be pushed through forcibly between the electrical wires in order to form that waterproof portion properly. As a consequence, the process normally lowers work efficiency.

To improve the operation process, the viscosity of water-sealing agent may be lowered to less than 1,000 poises. However, such an agent creates a new problem, in that the agent tends to sag from the electrical wires.

Further, the wire harness protected in such a manner must be controlled frequently, so as to check whether or not there is still no water infiltration at all. Such an operation further lowers the productivity.

The present invention is intended to solve such problems by using a plurality of water-sealing agents having different viscosities, and by providing a system for preventing water from passing between the electrical wires, which system can be installed in a wire harness in an easy and sure way.

To this end, there is provided a method of preventing water from penetrating into a wire harness. The wire harness contains a plurality of electrical wires and is adapted to fit into a grommet and to pass through a hole formed in a panel of a vehicle. Further, the electrical wires comprise respective sections which are to form at least part of a water-sealed portion. The above method comprises the steps of:
- arranging the electrical wires, so that the sections forming part of the water-sealed portion are arranged substantially in parallel;
- applying a first water-sealing agent on the sections;
- applying a second water-sealing agent over the first water-sealing agent, the second water-sealing agent having a viscosity higher than that of the first water-sealing agent; and
- curving the substantially parallel arrangement of sections to enable the sections of the harness to fit into the grommet, so as to form the water-sealed portion.

Preferably, the curving step comprises curving around the substantially parallel arrangement of sections within a thin film.

Suitably, the applying step of the second water-sealing agent comprises applying the latter so as to substantially contain the first water-sealing agent within.

Preferably yet, the first water-sealing agent has a viscosity of about 100 poises at the most, more preferably, of about 50 poises at the most.

Suitably, the second water-sealing agent is sufficiently viscous to form a paste. The second water-sealing agent may have a viscosity of at least about 1,000 poises, preferably, of at least about 10,000 poises.

Typically, the first water-sealing agent has a viscosity of about 50 poises at the most and the second water-sealing agent has a viscosity of at least about 10,000 poises.

Typically yet, the water-sealed portion has a length extending along the longitudinal direction of the electrical wires, and the length along which the second water-sealing agent is applied is greater than the length along which the first water-sealing agent is applied.

Preferably, the electrical wires arranged in parallel define a column arranged substantially vertically, and the first and second water-sealing agents are applied respectively from the bottom towards the top of the column of wires.

More generally, the invention relates to a method of providing a water-proof seal to length portion of an electrical cable comprised of a plurality of electrically insulated wires, comprising the steps of:
- arranging a length of the wires containing the length portion substantially adjacent each other along a plane,
- applying a first water-sealing agent on at least part of the length portion, and
- applying a second water-sealing agent over the first water-sealing agent, the second water-sealing agent having a viscosity higher than that of the first water-sealing agent and thereby substantially containing the first water-sealing agent within.

The invention also concerns a system for preventing water from penetrating into a wire harness, the wire harness containing a plurality of electrical wires and adapted to fit into a grommet and pass through a hole formed in a panel of a vehicle, the electrical wires comprising respective sections which are to form at least part of a water-sealed portion, the system comprising:
- means for arranging the electrical wires, so that the sections forming part of the water-sealed portion are arranged substantially in parallel;
- means for applying a first water-sealing agent on the sections;
- means for applying a second water-sealing agent over the first water-sealing agent, the second water-sealing agent having a viscosity higher than that of the first water-sealing agent; and
- means for curving the substantially parallel arrangement of sections to enable the sections of the harness to fit into the grommet, so as to form the water-sealed portion.

More generally, the invention also relates to a system for providing a water-proof seal to length portion of an electrical cable comprised of a plurality of electrically insulated wires, the system comprising:
- means for arranging a length of the wires containing the length portion substantially adjacent each other along a plane;
- means for applying a first water-sealing agent on at least part of the length portion; and
- means for applying a second water-sealing agent over the first water-sealing agent, the second water-sealing agent having a viscosity higher than that of the first water-sealing agent and thereby substantially containing the first water-sealing agent within .

In the above systems, the first water-sealing agent typically has a viscosity of about 50 poises at the most and the second water-sealing agent typically has a viscosity of at least about 10,000 poises.

The invention also relates to a system for forming a water sealed portion of a wire harness, specifically designed for carrying out the above-defined method, wherein the device has a substantially U-shaped form that comprises a base portion and, at each distal position, a pair of cable-holder portions with a top face, and each of the pairs of cable holder portions comprises a slit having an opening that extends from the corresponding top face towards the base portion, such that the electrical wires can be inserted through the openings and superposed on each other, extending parallel to the base portion and in the alignment direction of the slits.

Preferably, each of the top faces is inclined toward the slit so as to form two slant faces.

The invention further relates to a device for applying a water-sealing agent on electrical wires, specifically designed for carrying out the above-defined method, wherein the system comprises two substantially rectangular members arranged substantially in parallel to each other and corresponding end sections, and wherein the end sections comprise respective elongate openings of nozzles, wherein the end sections are turned inwardly, such that the elongate openings face each other and, when an electrical wire is interposed therebetween, a highly viscous water-sealing agent can be extruded around the electrical wire.

In the above device, a distance between the elongate openings is preferably set as a function of the diameter of an electrical wire to which the water-sealing agent is to be applied.

In the above structure, the lower-viscosity water-sealing agent is first applied to the electrical wires and fills the gaps formed between the electrical wires. Subsequently, the higher-viscosity water-sealing agent is applied and covers the lower-viscosity water-sealing agent as a whole, so that the latter is prevented from sagging or flowing along the length direction of the electrical wires. In this manner, the gaps between the electrical wires are filled with the lower-viscosity water-sealing agent, and water infiltration is completely eliminated.

Further, the sagging or lateral flow of the lower-viscosity water-sealing agent can be prevented securely, by virtue of the overlain higher-viscosity water-sealing agent.

When the viscosity of a first water-sealing agent is 100 poises or less, that water-sealing agent spreads smoothly into the space between the electrical wires, and the space is securely filled with this agent. Further, when a paste-like second water-sealing agent is subsequently applied thereupon, it prevents the first agent from sagging and maintains the latter filled between the wires.

In particular, when the second (paste-like) water-sealing agent is applied from the bottom wire towards the top wire, it pushes back the first (lower-viscosity) water-sealing agent which may eventually sag or drip down. The sagging of the first water-sealing agent can thus be avoided more efficiently.

The above, and the other objects, features and advantages of the present invention will be made apparent from the following description of the preferred embodiments, given purely as non-limiting examples, with reference to the accompanying drawings, in which:
FIG.1 is a perspective view of a device for preparing a water-sealed portion and a cable-arranging table, used in a preferred embodiment of the present invention;
FIG.2 is a perspective view of part of a device for applying a water-sealing agent used in the a preferred embodiment of present invention;
FIG.3 is a perspective view of the device for preparing a water-sealed portion of FIG.1, when electrical wires are aligned in a row;
FIG.4 shows how a low-viscosity water-sealing agent is applied to the electrical wires;
FIG.5A is a side view of the device for preparing a water-sealed portion of FIG.1, when the low-viscosity water-sealing agent is applied;
FIG.5B is a cross-sectional view of the water-sealed portion applied with the low-viscosity water-sealing agent, taken along line I1 - I1 of FIG.5A;
FIG.6 shows how a high viscosity water-sealing agent is applied to the electrical wires;
FIG.7A is a side view of the device for preparing a water-sealed portion, when the high-viscosity water-sealing agent is applied to the electrical wires;
FIG.7B is a cross-sectional view taken along line I2 - I2 of FIG.7A;
FIG.8A is a cross-sectional view of a water-sealed portion formed by rounding up the water-sealed electrical wires; and
FIG.8B is a side view of a grommet, when it holds a wire harness mounted with a water-sealed portion.

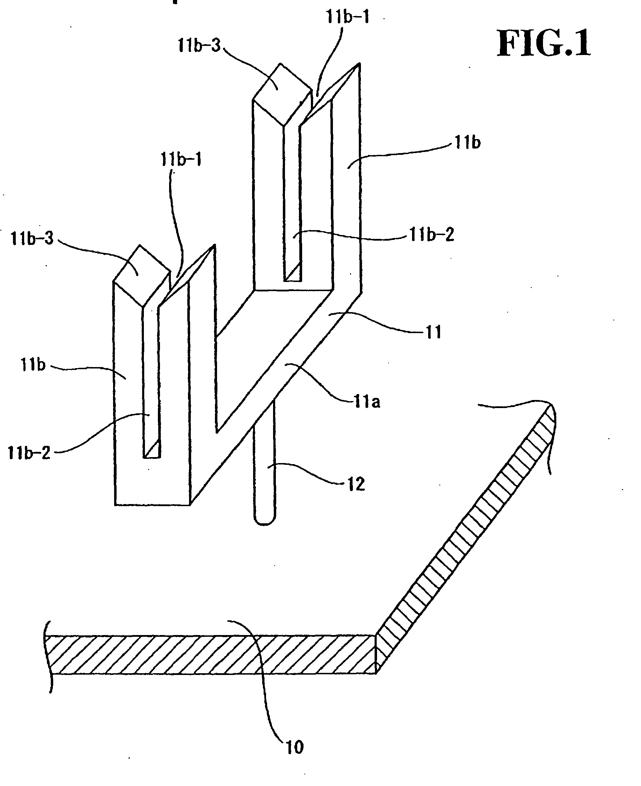

FIG.1 shows a water-sealing device 11 disposed on a cable-arranging table 10 used for assembling a wire harness. The water-sealing device 11 is held by a supporting rod 12 that can be mounted on the wire-arranging table 10 in a freely removable way. The water-sealing device 11 has a substantially U-shaped form that comprises a base portion 11a, and a first pair of cable-holder portions 11b with respective top faces, and a second pair of cable-holder portions 11b with respective top faces. The insulated electrical wires of a wire harness are arranged along the base portion 11a.

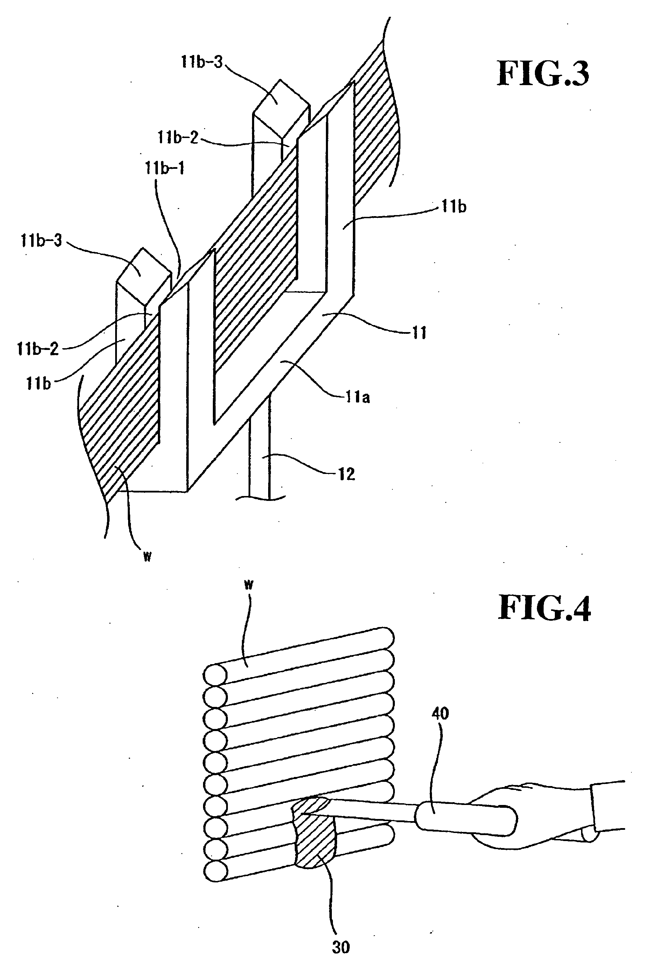

The first and second pairs of cable holder portions 11b comprise respective slits 11b-2 with openings 11b-1, the latter extending downwards from their corresponding top face. Each top face is inclined toward the slits 11b-2 so as to form two slanted faces 11b-3. Electrical wires w can thus be inserted through the opening 11b-1 and arranged in a row in the slits 1b-2 as shown in Fig.3, for instance.

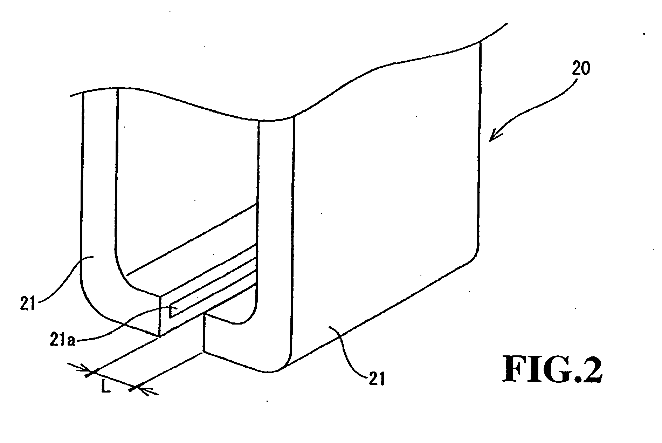

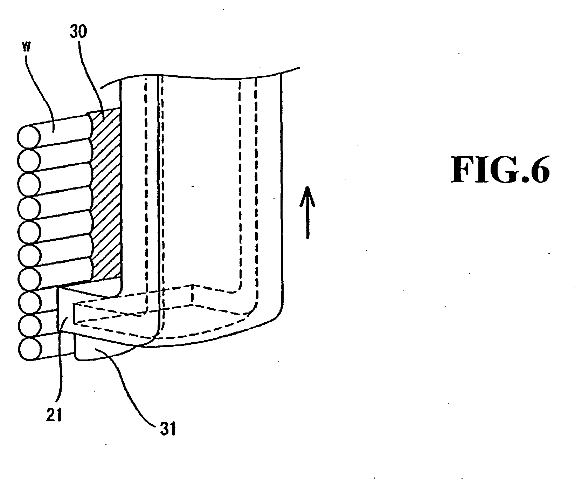

FIG.2 shows part of a device 20 for applying a water-sealing agent, by which a highly viscous (high-viscosity) water-sealing agent 31 (cf. Figs. 6-8A) is applied to electrical wires. The device 20 has two nozzles 21 at a lower portion extending in parallel along that lower portion (FIG.2). The end portion of each nozzle 21 is turned inwardly and has an elongate nozzle opening 21a. The highly viscous water-sealing agent 31 is thereby extruded around the wire w as the latter passes between the nozzle openings 21a.

The distance L between the two end faces of the nozzles 21 can be arranged as a function of the diameter of an electrical wire to which the agent is applied.

When a wire harness is formed, its constituent insulated electrical wires w are arranged on the cable-arranging table 10. The water-sealing device 11 is positioned on that portion of electrical wires w of the wire harness on which a grommet is to be fitted, and the electrical wires w are inserted between the first pair of cable-holder portions 11b and between the second pair of cable-holder portions 11b. As shown in FIG.3, the electrical wires w are thus arranged in a column within the slits 11b-2.

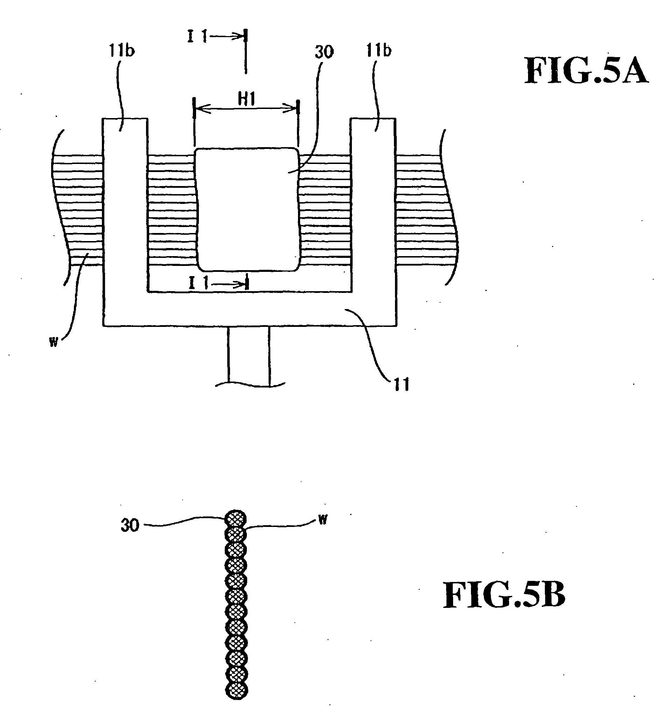

As shown in FIG.4, a low-viscous (low-viscosity) water-sealing agent 30 having a viscosity of less than about 100 poises, preferably less than about 50 poises, is applied to the aligned electrical wires w from the bottom end upwards, using a pallet, in the manner illustrated in the figure. FIG.5A shows the length H1 (measured along the electrical cables) of the portion to which the agent is applied, and FIG.5B shows how the gaps between the electrical wires are filled.

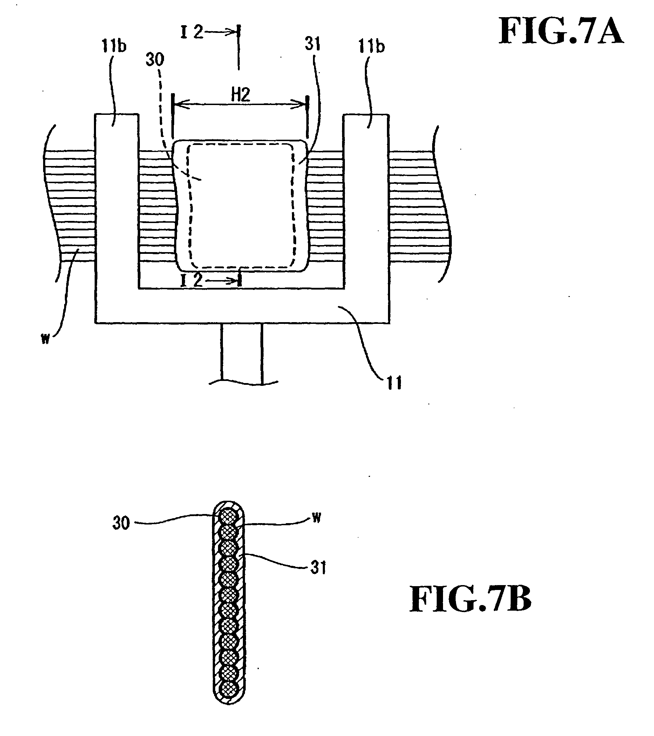

Then, as shown in FIG.6, the end faces of the nozzles 21 of the device 20 for applying the water-sealing agent are placed into contact with the electrical wire w at the bottom in the slits 11b-2 (cf. Figs.2-3). The highly viscous water-sealing agent 31, preferably in the form of a paste, is extruded through the openings 21a of the nozzles 21, while the nozzles are moved upwardly (viewed in the figure), so that the highly viscous water-sealing agent 31 is applied on both sides of all the electrical wires w. The highly viscous water-sealing agent 31 may have a viscosity of about 1,000 poises or more, preferably of about 5,000 poises or more, and most preferably of about 10,000 poises or more. Thus, as shown in FIG.7A and 7B, the highly viscous agent 31 covers the low-viscosity agent 30 along a cable length of H2 (H2 > H1) and from the bottommost to topmost electrical wires in the column.

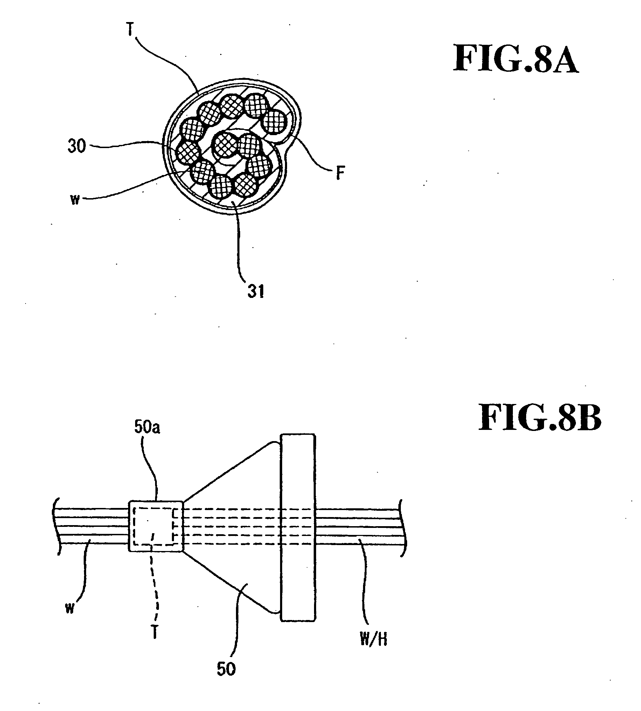

Finally, as shown in FIG.8A, the electrical wires are wrapped with a thin film F made of e.g. vinyl chloride. The parallel arrangement of portions of electrical wires coated with the low-viscosity agent 30 and highly viscous agent 31 is curved around within the thin film F into a spiral (seen from the wire cross-sections at the portions) so as to form a water-sealed portion, and the latter is fixed by a tape T. As shown in FIG.8B, the whole structure is passed through the tubular portion 50a of the grommet 50, and held hermetically therein.

In the above construction, a low-viscosity water-sealing agent 30 is first applied on vertically arranged electrical wires, and a highly viscous water-sealing agent 31 is then superposed thereto. In this manner, the low-viscosity water-sealing agent 30 serves to fill the gaps between the electrical wires w, and the highly viscous water-sealing agent 31 serves to prevent the low-viscosity water-sealing agent 30 from drooping down or oozing along the electrical wires w.

Filling the wire gaps with a low-viscosity agent 30 secures a good water seal. Thus, waterproofing quality inspections, hitherto considered as indispensable, can be obviated, and operation efficiencies can be greatly improved.

As shall be understood from the above, when a low-viscosity water-sealing agent and a highly viscous water-sealing agent are successively applied to the electrical wires, the former fills the gaps between the electrical wires w and the latter prevents the former from drooping down or flowing along the electrical wires w. Water migration between wires can thus be prevented completely. Consequently, commonly practised inspections for water sealing can be omitted and productivity is greatly improved.

## Claims

1. A method of preventing water from penetrating into a wire harness, said wire harness containing a plurality of electrical wires and adapted to fit into a grommet and to pass through a hole formed in a panel of a vehicle, said electrical wires comprising respective sections which are to form at least part of a water-sealed portion, **characterised in that** said method comprises the steps of:
- arranging said electrical wires, so that said sections forming part of said water-sealed portion are arranged substantially in parallel;
- applying a first water-sealing agent on said sections;
- applying a second water-sealing agent over said first water-sealing agent, said second water-sealing agent having a viscosity higher than that of said first water-sealing agent; and
- curving said substantially parallel arrangement of sections to enable said sections of the harness to fit into said grommet, so as to form said water-sealed portion.

2. The method according to claim 1, wherein said curving step comprises curving around said substantially parallel arrangement of sections within a thin film.

3. The method according to claim 1 or 2, wherein said applying step of said second water-sealing agent comprises applying the latter so as to substantially contain said first water-sealing agent within.

4. The method according to any one of claims 1 to 3, wherein said first water-sealing agent has a viscosity of about 100 poises at the most.

5. The method according to any one of claims 1 to 3, wherein said first water-sealing agent has a viscosity of about 50 poises at the most.

6. The method according to any one of claims 1 to 5, wherein said second water-sealing agent is sufficiently viscous to form a paste.

7. The method according to any one of claims 1 to 6, wherein said second water-sealing agent has a viscosity of at least about 1,000 poises.

8. The method according to any one of claims 1 to 6, wherein said second water-sealing agent has a viscosity of at least about 10,000 poises.

9. The method according to any one of claims 1 to 8, wherein said first water-sealing agent has a viscosity of about 50 poises at the most and said second water-sealing agent has a viscosity of at least about 10,000 poises.

10. The method according to any one of claims 1 to 9, wherein said water-sealed portion has a length extending along the longitudinal direction of said electrical wires, and said length along which said second water-sealing agent is applied is greater than the length along which said first water-sealing agent is applied.

11. The method according to any one of claims 1 to 10, wherein said electrical wires arranged in parallel define a column arranged substantially vertically, and said first and second water-sealing agents are applied respectively from the bottom towards the top of said column of wires.

12. A method of providing a water-proof seal to length portion of an electrical cable comprised of a plurality of electrically insulated wires, comprising the steps of:
- arranging a length of said wires containing said length portion substantially adjacent each other along a plane;
- applying a first water-sealing agent on at least part of said length portion; and
- applying a second water-sealing agent over said first water-sealing agent, said second water-sealing agent having a viscosity higher than that of said first water-sealing agent and thereby substantially containing said first water-sealing agent within.

13. A system for preventing water from penetrating into a wire harness, said wire harness containing a plurality of electrical wires and adapted to fit into a grommet and pass through a hole formed in a panel of a vehicle, said electrical wires comprising respective sections which are to form at least part of a water-sealed portion, said system comprising:
- means for arranging said electrical wires, so that said sections forming part of said water-sealed portion are arranged substantially in parallel;
- means for applying a first water-sealing agent on said sections;
- means for applying a second water-sealing agent over said first water-sealing agent, said second water-sealing agent having a viscosity higher than that of said first water-sealing agent; and
- means for curving said substantially parallel arrangement of sections to enable said sections of the harness to fit into said grommet, so as to form said water-sealed portion.

14. A system for providing a water-proof seal to length portion of an electrical cable comprised of a plurality of electrically insulated wires, said system comprising:
- means for arranging a length of said wires containing said length portion substantially adjacent each other along a plane;
- means for applying a first water-sealing agent on at least part of said length portion; and
- means for applying a second water-sealing agent over said first water-sealing agent, said second water-sealing agent having a viscosity higher than that of said first water-sealing agent and thereby substantially containing said first water-sealing agent within .

15. The system according to claim 13 or 14, wherein said first water-sealing agent has a viscosity of about 50 poises at the most and said second water-sealing agent has a viscosity of at least about 10,000 poises.

16. A system, according to claims 13 or 14, wherein said means for arranging said electrical wire on said length has a substantially U-shaped form that comprises a base portion (11a) and, at each distal position of said base portion, a pair of cable-holder portions (11b) with a top face, and each of said pairs of cable holder portions (11b) comprises a slit (11b-2) having an opening (11b-1) that extends from corresponding said top face towards said base portion (11a), such that said electrical wires (w) can be inserted through said openings (11b-1) and superposed on each other, extending parallel to said base portion (11a) and in the alignment direction of said slits (11b-2).

17. The system according to claim 16, wherein each of said top faces is inclined toward the slit (11b-2) so as to form two slant faces (11b-3).

18. A system, according to claims 13 or 14, wherein said means for applying a water sealing agent comprises two substantially rectangular members arranged substantially in parallel to each other and corresponding end sections, and wherein said end sections comprise respective elongate openings (21a) of nozzles (21), wherein said end sections are turned inwardly, such that said elongate openings (21a) face each other and, when an electrical wire (w) is interposed therebetween, a highly viscous water-sealing agent (31) can be extruded around said electrical wire.

19. The system according to claim 18, wherein a distance (L) between the elongate openings (21a) is set as a function of the diameter of an electrical wire to which said water-sealing agent is to be applied.

## Patentansprüche

1. Verfahren, um Wasser an einem Eindringen in einen Kabelbaum zu hindern, wobei der Kabelbaum eine Mehrzahl von elektrischen Drähten bzw. Leitungen enthält und adaptiert ist, in eine Durchgangstülle bzw. Gummi-Durchgangstülle einzupassen und durch ein Loch hindurchzutreten, welches in einem Paneel bzw. einer Platte eines Fahrzeugs ausgebildet ist bzw. wird, wobei die elektrischen Drähte entsprechende Abschnitte umfassen, welche vorliegen, um wenigstens ein Teil eines wasserabgedichteten Bereichs auszubilden, **dadurch gekennzeichnet, daß** das Verfahren die Schritte umfaßt:
- Anordnen der elektrischen Drähte, so daß die Abschnitte, welche ein Teil des wasserabgedichteten Abschnitts bilden, im wesentlichen parallel angeordnet werden;
- Aufbringen eines ersten Wasserabdichtagens bzw. -mittels auf bzw. an die Abschnitte;
- Aufbringen eines zweiten Wasserabdichtmittels über das erste Wasserabdichtmittel, wobei das zweite Wasserabdichtmittel eine Viskosität höher als diejenige des ersten Wasserabdichtmittels aufweist; und
- Krümmen der im wesentlichen parallelen Anordnung von Abschnitten, um den Abschnitten des Kabelbaums zu ermöglichen, in die Durchgangstülle einzupassen, um den wasserabgedichteten Bereich auszubilden.

2. Verfahren nach Anspruch 1, wobei der Krümmungsschritt ein Krümmen um die im wesentlichen parallele Anordnung der Abschnitte innerhalb eines dünnen Films umfaßt.

3. Verfahren nach Anspruch 1 oder 2, wobei der Aufbringungsschritt des zweiten Wasserabdichtmittels ein Aufbringen des Letzteren umfaßt, um im wesentlichen das erste Wasserabdichtmittel darin zu enthalten.

4. Verfahren nach einem der Ansprüche 1 bis 3, wobei das erste Wasserabdichtmittel eine Viskosität von höchstens etwa 100 Poise aufweist.

5. Verfahren nach einem der Ansprüche 1 bis 3, wobei das erste Wasserabdichtmittel eine Viskosität von höchstens etwa 50 Poise aufweist.

6. Verfahren nach einem der Ansprüche 1 bis 5, wobei das zweite Wasserabdichtmittel ausreichend viskos ist, um eine Paste zu bilden.

7. Verfahren nach einem der Ansprüche 1 bis 6, wobei das zweite Wasserabdichtmittel eine Viskosität von wenigstens etwa 1.000 Poise aufweist.

8. Verfahren nach einem der Ansprüche 1 bis 6, wobei das zweite Wasserabdichtmittel eine Viskosität von wenigstens etwa 10.000 Poise aufweist.

9. Verfahren nach einem der Ansprüche 1 bis 8, wobei das erste Wasserabdichtmittel eine Viskosität von höchstens etwa 50 Poise aufweist und das zweite Wasserabdichtmittel eine Viskosität von wenigstens etwa 10.000 Poise aufweist.

10. Verfahren nach einem der Ansprüche 1 bis 9, wobei der wasserabgedichtete Abschnitt eine Länge aufweist, welche sich entlang der Längsrichtung der elektrischen Drähte erstreckt, und wobei die Länge, entlang welcher das zweite Wasserabdichtmittel aufgebracht wird, größer ist als die Länge, entlang welcher das erste Wasserabdichtmittel aufgebracht wird.

11. Verfahren nach einem der Ansprüche 1 bis 10, wobei die elektrischen Drähte parallel angeordnet werden, um eine Säule zu definieren, welche im wesentlichen vertikal angeordnet wird, und wobei das erste und zweite Wasserabdichtmittel jeweils von dem Boden in Richtung zur Oberseite der Säule von Drähten aufgebracht werden.

12. Verfahren zum Bereitstellen einer wasserdichten Abdichtung bzw. Versiegelung an einem Längenabschnitt eines elektrischen Kabels, welches aus einer Vielzahl von elektrisch isolierten Drähten bzw. Leitungen besteht, umfassend die Schritte:
- Anordnen einer Länge der Drähte, die den Längenabschnitt enthalten, im wesentlichen benachbart zueinander bzw. angrenzend bzw. anliegend aneinander entlang einer Ebene;
- Aufbringen eines ersten Wasserabdichtagens bzw. -mittels auf bzw. an wenigstens einem Teil des Längenabschnitts; und
- Aufbringen eines zweiten Wasserabdichtmittels über das erste Wasserabdichtmittel, wobei das zweite Wasserabdichtmittel eine Viskosität höher als diejenige des ersten Wasserabdichtmittels aufweist und dadurch im wesentlichen das erste Wasserabdichtmittel darin enthält.

13. System, um Wasser an einem Eindringen in einen Kabelbaum zu hindern, wobei der Kabelbaum eine Mehrzahl von elektrischen Drähten bzw. Leitungen enthält und adaptiert ist, um in eine Durchgangstülle bzw. Gummi-Durchgangstülle einzupassen und durch ein Loch hindurchzutreten, welches in einem Paneel bzw. einer Platte eines Fahrzeugs ausgebildet ist, wobei die elektrischen Drähte entsprechende Abschnitte umfassen, welche vorliegen, um wenigstens ein Teil eines wasserabgedichteten Bereichs auszubilden, wobei das System umfaßt:
- Mittel zum Anordnen der elektrischen Drähte, so daß die Abschnitte, welche ein Teil des wasserabgedichteten Bereichs bilden, im wesentlichen parallel angeordnet sind;
- Mittel zum Aufbringen eines ersten Wasserabdichtagens bzw. -mittels auf bzw. an die Querschnitte;
- Mittel zum Aufbringen eines zweiten Wasserabdichtmittels über das erste Wasserabdichtmittel, wobei das zweite Wasserabdichtmittel eine Viskosität höher als diejenige des ersten Wasserabdichtmittels aufweist; und
- Mittel zum Krümmen der im wesentlichen parallelen Anordnung der Abschnitte, um den Abschnitten des Kabelbaums zu ermöglichen, in die Durchgangstülle einzupassen, um den wasserabgedichteten Abschnitt auszubilden.

14. System zum Bereitstellen einer wasserdichten Abdichtung an einem Längenabschnitt eines elektrischen Kabels, welches aus einer Mehrzahl von elektrisch isolierten Drähten bzw. Leitungen besteht, wobei das System umfaßt:
- Mittel zum Anordnen einer Länge der Drähte, welche den Längenabschnitt enthalten, im wesentlichen benachbart zueinander entlang einer Ebene;
- Mittel zum Aufbringen eines ersten Wasserabdichtmittels auf bzw. an wenigstens ein Teil des Längenabschnitts; und
- Mittel zum Aufbringen eines zweiten Wasserabdichtmittels über das erste Wasserabdichtmittel, wobei das zweite Wasserabdichtmittel eine Viskosität höher als diejenige des ersten Wasserabdichtmittels aufweist und dadurch im wesentlichen das erste Wasserabdichtmittel darin enthält.

15. System nach Anspruch 13 oder 14, wobei das erste Wasserabdichtmittel eine Viskosität von höchstens etwa 50 Poise aufweist und das zweite Wasserabdichtmittel eine Viskosität von wenigstens etwa 10.000 Poise aufweist.

16. System nach Anspruch 13 oder 14, wobei die Mittel zum Anordnen des elektrischen Drahts oder der Länge eine im wesentlichen U-förmige Form aufweisen, welche einen Basisabschnitt (11a) und an jeder distalen Position des Basisabschnitts ein Paar von Kabelhalterabschnitten (11b) mit einer oberen Fläche bzw. Seite aufweist, und jedes des Paars von Kabelhalterabschnitten (11b) einen Schlitz (11b-2) umfaßt, welcher eine Öffnung (11b-1) aufweist, welche sich von der entsprechenden oberen Seite in Richtung zu dem Basisabschnitt (11a) erstreckt, so daß die elektrischen Drähte (w) durch die Öffnungen (11b-1) eingeführt bzw. eingesetzt und einander überlagert werden können, welche sich parallel zu dem Basisabschnitt (11a) und in der Ausrichtungsrichtung der Schlitze (11b-2) erstrecken.

17. System nach Anspruch 16, wobei jede der oberen Flächen zu dem Schlitz (11b-2) geneigt ist, um zwei Neigungsflächen bzw. -seiten bzw. geneigte Flächen (11b-3) auszubilden.

18. System nach Anspruch 13 oder 14, wobei die Mittel zum Aufbringen eines Wasserabdichtmittels zwei im wesentlichen rechteckige bzw. rechtwinkelige Glieder umfassen, welche im wesentlichen parallel zueinander und zu entsprechenden Endabschnitten angeordnet sind, und wobei die Endabschnitte jeweilige längliche Öffnungen (21a) von Düsen (21) umfassen, wobei die Endabschnitte nach innen gewendet sind, so daß die länglichen Öffnungen (21a) zueinander gerichtet sind bzw. schauen und, wenn ein elektrischer Draht bzw. eine elektrische Leitung (w) dazwischen zwischengeschaltet ist, ein hoch viskoses Wasserabdichtmittel (31) um den elektrischen Draht extrudiert werden kann.

19. System nach Anspruch 18, wobei ein Abstand (L) zwischen den länglichen Öffnungen (21a) als eine Funktion des Durchmessers eines elektrischen Drahts eingestellt bzw. festgelegt ist, auf welche das Wasserabdichtmittel aufzubringen ist.

## Revendications

1. Procédé pour empêcher l'eau de pénétrer dans un faisceau électrique, ledit faisceau électrique contenant une pluralité de fils électriques et étant adapté pour s'ajuster dans un passe-fil et pour traverser un trou formé dans un panneau d'un véhicule, lesdits fils électriques comprenant des sections respectives qui doivent former au moins une partie d'une portion à joint hydraulique, **caractérisé en ce que** ledit procédé comprend les étapes consistant à :
- agencer lesdits fils électriques, de sorte que lesdites sections faisant partie de ladite portion à joint hydraulique soient agencées sensiblement en parallèle ;
- appliquer un premier agent de jonction hydraulique sur lesdites sections ;
- appliquer un second agent de jonction hydraulique sur ledit premier agent de jonction hydraulique, ledit second agent de jonction hydraulique ayant une viscosité supérieure à celle dudit premier agent de jonction hydraulique ; et
- incurver ledit agencement sensiblement parallèle de sections pour permettre auxdites sections du faisceau de s'ajuster dans ledit passe-fil, de façon à former ladite portion à joint hydraulique.

2. Procédé selon la revendication 1, dans lequel ladite étape d'incurvation comprend l'incurvation autour dudit agencement sensiblement parallèle de sections au sein d'un film mince.

3. Procédé selon la revendication 1 ou 2, dans lequel ladite étape d'application dudit second agent de jonction hydraulique comprend l'application de ce dernier de façon à contenir sensiblement ledit premier agent de jonction hydraulique en son sein.

4. Procédé selon l'une quelconque des revendications 1 à 3, dans lequel ledit premier agent de jonction hydraulique a une viscosité d'environ 100 poises au plus.

5. Procédé selon l'une quelconque des revendications 1 à 3, dans lequel ledit premier agent de jonction hydraulique a une viscosité d'environ 50 poises au plus.

6. Procédé selon l'une quelconque des revendications 1 à 5, dans lequel ledit second agent de jonction hydraulique est suffisamment visqueux pour former une pâte.

7. Procédé selon l'une quelconque des revendications 1 à 6, dans lequel le second agent de jonction hydraulique a une viscosité d'au moins environ 1 000 poises.

8. Procédé selon l'une quelconque des revendications 1 à 6, dans lequel second agent de jonction hydraulique a une viscosité d'au moins environ 10 000 poises.

9. Procédé selon l'une quelconque des revendications 1 à 8, dans lequel ledit premier agent de jonction hydraulique a une viscosité d'environ 50 poises au plus et ledit second agent de jonction hydraulique a une viscosité d'au moins environ 10 000 poises.

10. Procédé selon l'une quelconque des revendications 1 à 9, dans lequel ladite portion à joint hydraulique a une longueur s'étendant le long de la direction longitudinale desdits fils électriques, et ladite longueur le long de laquelle ledit second agent de jonction hydraulique est appliqué est plus grande que la longueur de long de laquelle ledit premier agent de jonction hydraulique est appliqué.

11. Procédé selon l'une quelconque des revendications 1 à 10, dans lequel lesdits fils électriques agencés en parallèle définissent une colonne agencée sensiblement verticalement, et lesdits premier et second agents de jonction hydraulique sont appliqués respectivement du fond vers le sommet de ladite colonne de fils.

12. Procédé pour former un joint étanche à l'eau sur une portion de longueur d'un câble électrique composé d'une pluralité de fils électriquement isolés, comprenant les étapes consistant à :
- agencer une longueur desdits fils contenant ladite portion de longueur sensiblement adjacents les uns aux autres le long d'un plan ;
- appliquer un premier agent de jonction hydraulique sur au moins une partie de ladite portion de longueur ; et
- appliquer un second agent de jonction hydraulique sur ledit premier agent de jonction hydraulique, ledit second agent de jonction hydraulique ayant une viscosité plus élevée que celle dudit premier agent de jonction hydraulique et contenant ainsi sensiblement ledit premier agent de jonction hydraulique en son sein.

13. Système pour empêcher l'eau de pénétrer dans un faisceau électrique, ledit faisceau électrique étant adapté pour s'ajuster dans un passe-fil et traverser un trou formé dans un panneau d'un véhicule, lesdits fils électriques comprenant des sections respectives qui doivent former au moins une partie de la portion à joint hydraulique, ledit système comprenant :
- un moyen destiné à agencer lesdits fils électriques, de sorte que lesdites sections faisant partie de ladite portion à joint hydraulique soient agencées sensiblement en parallèle ;
- un moyen destiné à appliquer un premier agent de jonction hydraulique sur lesdites sections ;
- un moyen destiné à appliquer un second agent de jonction hydraulique sur ledit premier agent de jonction hydraulique, ledit second agent de jonction hydraulique ayant une viscosité plus élevée que celle dudit premier agent de jonction hydraulique ; et
- un moyen destiné à incurver ledit agencement sensiblement parallèle de sections pour permettre auxdites sections du faisceau de s'ajuster dans ledit passe-fil, de façon à former ladite portion à joint hydraulique.

14. Système pour former un joint étanche à l'eau sur une portion de longueur d'un câble électrique composé d'une pluralité de fils électriquement isolés, ledit système comprenant :
- un moyen destiné à agencer une longueur desdits fils contenant ladite portion de longueur sensiblement adjacents les uns aux autres le long d'un plan ;
- un moyen destiné à appliquer un premier agent de jonction hydraulique sur au moins une partie de ladite portion de longueur ; et
- un moyen destiné à appliquer un second agent de jonction hydraulique sur ledit premier agent de jonction hydraulique, ledit second agent de jonction hydraulique ayant une viscosité plus élevée que celle dudit premier agent de jonction hydraulique et contenant ainsi sensiblement ledit premier agent de jonction hydraulique en son sein.

15. Système selon la revendication 13 ou 14, dans lequel ledit premier agent de jonction hydraulique a une viscosité d'environ 50 poises au plus et ledit second agent de jonction hydraulique a une viscosité d'au moins environ 10 000 poises.

16. Système selon la revendication 13 ou 14, dans lequel ledit moyen destiné à agencer ledit fil électrique ou ladite longueur a une forme sensiblement en U qui comprend une portion de base (11a) et, au niveau de chaque portion distale de ladite portion de base, une paire de portions porte-câble (11b) ayant une face supérieure, et chacune desdites paires de portions porte-câble (11b) comprend une fente (11b-2) ayant une ouverture (11b-1) qui s'étend depuis ladite face supérieure correspondante vers ladite portion de base (11a), de telle sorte que lesdits fils électriques (W) puissent être insérés à travers lesdites ouvertures (11b-1) et être superposés les uns sur les autres, s'étendant parallèles à ladite portion de base (11a) et dans la direction d'alignement desdites fentes (11b-2).

17. Système selon la revendication 16, dans lequel chacune desdites faces supérieures est inclinée vers la fente (11b-2) de façon à former deux faces inclinées (11b-3).

18. Système selon la revendication 13 ou 14, dans lequel ledit moyen destiné à appliquer un agent de jonction hydraulique comprend deux organes sensiblement rectangulaires agencés sensiblement en parallèle l'un à l'autre et des sections d'extrémité correspondantes, et dans lequel lesdites sections d'extrémité comprennent des ouvertures allongées respectives (21a) de buses (21), dans lequel lesdites sections d'extrémité sont tournées vers l'intérieur, de telle sorte que lesdites ouvertures allongées (21a) se font face l'une l'autre et, lorsqu'un fil électrique (W) est interposé entre elles, un agent de jonction hydraulique hautement visqueux (31) peut être extrudé autour dudit fil électrique.

19. Système selon la revendication 18, dans lequel une distance (L) entre les ouvertures allongées (21a) est fixée en fonction du diamètre d'un fil électrique auquel ledit agent de jonction hydraulique doit être appliqué.
